# EUROPÄISCHE PATENTSCHRIFT

(11) **EP 3 499 268 B1**
(45) Veröffentlichungstag und Bekanntmachung des Hinweises auf die Patenterteilung: **02.12.2020**
(21) Anmeldenummer: 18211461.1
(22) Anmeldetag: 11.12.2018
(51) Int. Cl.: G01S 17/08, G01S 7/481, G02B 15/14, G02B 27/00, G02B 7/10, H04N 5/232

(54) **KAMERASYSTEM MIT LASERBASIERTEM RANGEFINDER**
CAMERA SYSTEM WITH LASER-BASED RANGE FINDER
SYSTÈME DE CAMÉRA À TÉLÉMÈTRE LASER

(30) Priorität: 14.12.2017 DE 102017130012
(43) Veröffentlichungstag der Anmeldung: 19.06.2019
(73) Patentinhaber: Arnold & Richter Cine Technik GmbH & Co. Betriebs KG, 80807 München (DE)
(72) Erfinder: MUSCHAWECK, Julius, 82131 Gauting (DE); HAUBMANN, Michael, 1230 Wien (DE)
(74) Vertreter: Maikowski & Ninnemann Patentanwälte Partnerschaft mbB

(56) Entgegenhaltungen:
- WO-A2-2006/012859
- US-A1- 2014 104 591
- US-A1- 2016 245 919

## Beschreibung

### TECHNISCHES GEBIET

Die vorliegende Erfindung betrifft Ausführungsformen eines Kamerasystems mit einer laserbasierten Messeinheit, welche den Abstand zwischen einer Kameraeinheit des Kamerasystems und einem durch die Kameraeinheit zu erfassenden Objekt misst.

### HINTERGRUND

Aus der Druckschrift WO 2006/012859 A2 ist ein Kamerasystem bekannt, bei dem eine Messeinheit vorgesehen ist, die den Abstand zwischen einer Kameraeinheit des Kamerasystems und einem durch die Kameraeinheit zu erfassenden Objekt misst. Bei der Messeinheit handelt es sich um eine laserbasierte Messeinheit, und auf Basis eines von dieser Messeinheit bereitgestellten Messsignals kann die Kameraeinheit eingestellt werden, beispielsweise hinsichtlich einer Bildschärfe. Dies kann beispielsweise automatisch erfolgen, indem ein Objektiv der Kameraeinheit entsprechend eingestellt wird.

Weiter beschreibt die Druckschrift US 9,377,302 B2 eine laserbasierte Entfernungsmesseinheit, bei der ein modular aufgebautes Linsensystem vorgesehen ist, das dazu dient, einen punktförmigen Laserstrahl in einen linienförmigen Strahl zu überführen. Das Linsensystem kann je nach Anwendungsfall mit unterschiedlichen Einzellinsen bestückt werden.

Mit Blick auf die Aufnahmequalität ist es wünschenswert, dass stets ein die aktuelle Entfernung zwischen dem kameramäßig zu erfassenden Objekt und der Kameraeinheit möglichst exakt angegebener Messwert bereitsteht, sodass darauf basierend eine Einstellung der Kameraeinheit, entweder automatisch oder manuell, erfolgen kann.

Die US 2016/0245919 A1 beschreibt ein Linsensystem, wobei mithilfe eines Aktuators der Abstand zwischen zwei Linsen eingestellt werden kann, um die Ausdehnung eines Messstrahls verändern zu können.

### BESCHREIBUNG

Gemäß einer Ausführungsform umfasst ein Kamerasystem: eine Kameraeinheit zum Erfassen von Steh- und/oder Bewegtbildern eines Objekts, wobei die die Kameraeinheit hinsichtlich wenigstens eines für die Erfassung der Steh- und/oder Bewegtbilder relevanten Parameters auf Basis eines Messsignals einstellbar ist; und eine Messeinheit zum Erfassen eines Abstands zwischen dem Objekt und der Kameraeinheit. die Messeinheit weist auf: einen Laser-Sendeempfänger zum Aussenden eines Lasersignals und zum Empfangen eines von dem Objekt reflektierten Lasersignals; eine an den Laser-Sendeempfänger gekoppelte Auswerteeinheit, die ausgebildet ist, das Messsignal bereitzustellen, wobei das Messsignal für den Abstand zwischen dem Objekt und der Kameraeinheit indikativ ist; und ein Linsensystem, das wenigstens zwei voneinander beabstandete Linsen aufweist, durch die das von dem Laser-Sendeempfänger ausgesendete Lasersignal tritt, wobei wenigstens eine der Linsen beweglich angeordnet ist, so dass der Abstand zwischen den wenigstens zwei Linsen parallel zu der Lasersignalsenderichtung variabel einstellbar ist

Weitere Merkmale und Vorteile werden dem Fachmann in Anbetracht des Studiums der nachfolgenden detaillierten Beschreibung sowie des Sichtens der begleitenden Zeichnungen deutlich.

### KURZE BESCHREIBUNG DER ZEICHNUNGEN

Die in den Figuren gezeigten Teile sind nicht notwendigerweise maßstabsgetreu; vielmehr liegt die Betonung in dem Darstellen von Prinzipien der Erfindung. Ferner bezeichnen in den Figuren gleich Bezugszeichen einander entsprechende Teile. In den Figuren zeigen:

- Fig. 1: schematisch und exemplarisch ein Kamerasystem gemäß einer oder mehreren Ausführungsformen;
- Fig. 2: schematisch und exemplarisch eine Messeinheit gemäß einer oder mehreren Ausführungsformen; und
- Fig. 3A-C: jeweils schematisch und exemplarisch ein Linsensystem gemäß einer oder mehreren Ausführungsformen; und
- Fig. 4 - 6: jeweils schematisch und exemplarisch Komponenten einer Messeinheit gemäß einer oder mehreren Ausführungsformen.

### DETAILLIERTE BESCHREIBUNG

In der folgenden detaillierten Beschreibung wird auf die begleitenden Zeichnungen Bezug genommen, in denen durch die Veranschaulichung spezifischer Ausführungsformen gezeigt wird, wie die Erfindung in die Praxis umgesetzt werden kann.

Bezug wird nunmehr im Detail auf verschiedene Ausführungsformen und auf ein oder mehrere Beispiele, die in den Figuren veranschaulicht sind, genommen. Jedes Beispiel wird in erläuternder Art und Weise präsentiert und ist nicht als eine Einschränkung der Erfindung zu deuten. Beispielsweise können veranschaulichte oder als Teil einer Ausführungsform beschriebene Merkmale auf oder im Zusammenhang mit anderen Ausführungsformen angewandt werden, um noch eine weitere Ausführungsform hervorzubringen. Dass die vorliegende Erfindung derartige Modifizierungen und Variationen umfasst, ist beabsichtigt. Die Beispiele werden unter Anwendung einer spezifischen Sprache beschrieben, die nicht als den Schutzumfang der angefügten Ansprüche einschränkend ausgelegt werden sollte. Die Zeichnungen sind keine maßstabgetreue Wiedergabe und dienen lediglich der Veranschaulichung. Zum besseren Verständnis sind, wenn nicht anders angegeben, dieselben Elemente durch dieselben Referenzen in den verschiedenen Zeichnungen gekennzeichnet worden.

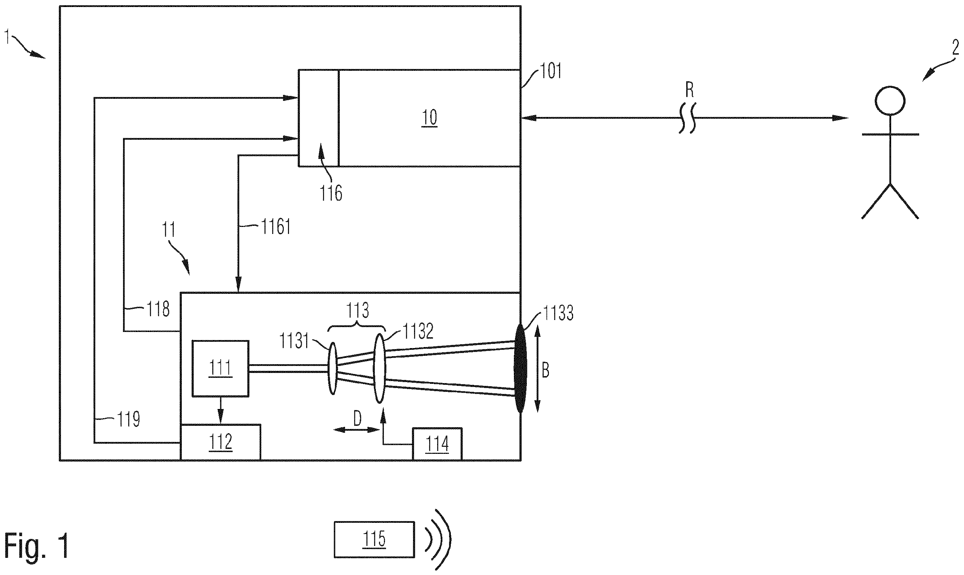

Die Fig. 1 zeigt schematisch und exemplarisch eine Ausführungsform eines Kamerasystems 1. Das Kamerasystem 1 umfasst eine Kameraeinheit 10 zum Erfassen von Steh-und/oder Bewegtbildern eines Objektes 2, wie eine Person, ein Gegenstand, ein Landschaftselement etc.

Das Kamerasystem 1 ist beispielsweise ausgebildet, im Rahmen der Kinematographie verwendet zu werden, also beispielsweise zur Aufnahme eines Dokumentarfilms, eines Spielfilms und dergleichen. Das Kamerasystem 1 kann ein kinematographisches Kamerasystem 1 sein.

Die Kameraeinheit 10 umfasst beispielsweise die üblichen Komponenten einer Kamera, die in der Fig. 1 nicht näher dargestellt sind. Zu derartigen Komponenten gehören beispielsweise eine Kamera-Optik mit wenigstens einem Objektiv 101, wenigstens ein Bildsensor, ein Kamera-Controller 116 mit digitalen Signalverarbeitungsmitteln, elektromechanische Verstellmechanismen (die z.B. an den Kamera-Controller 116 gekoppelt sein können), elektronische Speicher zur Speicherung von Bilddaten, usw. Auf die Einzelheiten beispielhafte Ausbildungen der Kameraeinheit 10 soll hier nicht näher eingegangen werden. Die Kameraeinheit 10 kann ausgebildet sein, im Rahmen der Kinematographie verwendet zu werden, also beispielsweise zur Aufnahme eines Dokumentarfilms, eines Spielfilms und dergleichen. Die Kameraeinheit 10 kann eine kinematographische Kameraeinheit 10 sein.

Mit Blick auf die vorstehend genannten optionalen Komponenten, die einen Teil der Kameraeinheit 10 bilden können, ist vorgesehen, dass die Kameraeinheit 10 hinsichtlich wenigstens eines für die Erfassung der Steh- und/oder Bewegtbilder relevanten Parameters auf Basis eines Messsignals einstellbar ist. Der wenigstens eine für die Erfassung der Steh- und/oder Bewegtbilder relevante Parameter kann Folgendes sein: eine Brennweite, Bildschärfe, eine Auflösung, ein Fokus, eine Linsenposition, oder ein Steuerparameter betreffend die Bildstabilisation. Nach einer Ausführungsform ist der Kamera-Controller 116 ausgebildet, wenigstens einen der für die Erfassung der Steh- und/oder Bewegtbilder relevante Parameter einzustellen, bspw. den Fokus und/oder die Brennweite und/oder eine Bildschärfe.

Beispielsweise kann die Bildschärfe bei der Aufnahme der Steh- und/oder Bewegtbilder eingestellt werden, indem die Optik der Kameraeinheit 10 entsprechend eingestellt wird. Hierfür ist z.B. ein (hier nicht dargestellter) elektromechanischer Verstellmechanismus vorgesehen, z.B. ein Objektivmotor, der auf Basis des Messsignals (oder eines davon abgeleiteten Signals) die Optik der Kameraeinheit 10 einstellt.

Das Kamerasystem 1 umfasst weiter eine Messeinheit 11 zum Erfassen eines Abstands R ("Range") zwischen der Kameraeinheit 10 und dem durch die Kameraeinheit 10 zu erfassenden Objekt 2. Die Messeinheit ist beispielsweise als ein sog. "Rangefinder" des Kamerasystems 1 ausgebildet. Bei einer Ausführungsform ist die Messeinheit 11 derart an dem Kamerasystem 1 befestigt oder darin installiert, dass der Abstand zwischen der Messeinheit 11 und dem Objekt 2 zumindest annähernd identisch ist zu dem Abstand zwischen dem Objekt 2 und der Kameraeinheit 10 (bspw. zwischen dem Objekt 2 und Objektiv 101) sein kann. Auf etwaige Unterschiede zwischen dem Abstand Objekt-Messeinheit einerseits und Objekt-Kameraeinheit andererseits wird an späterer Stelle nochmals genauer eingegangen werden.

Es versteht sich, dass der Abstand R zwischen der Kameraeinheit 10 (bzw. dessen das Licht einfangende Objektiv 101) und dem zu erfassenden Objekt 2 für die korrekte Einstellung der Kameraeinheit 10 relevant ist. Daher ist es wünschenswert, dass der tatsächliche Abstand stets bekannt ist, insbesondere bei beweglichen Objekten und/oder in dem Fall, wo sich das Kamerasystem 1 bewegt, also in Situationen, in denen sich der Abstand zwischen Objekt 2 und Kameraeinheit 10 während der Aufnahme ständig verändert.

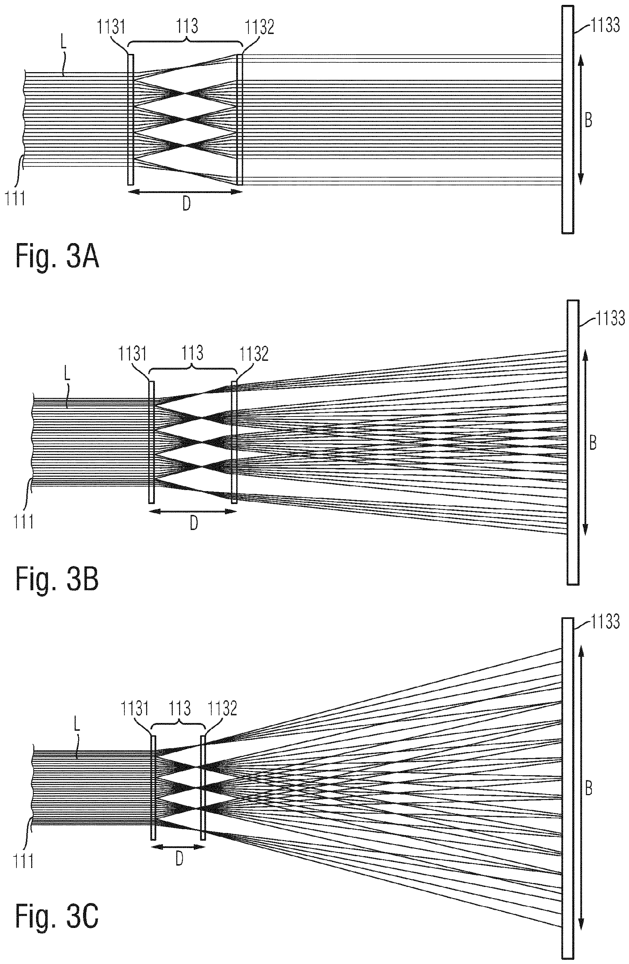

Die Messeinheit 11 umfasst daher einen Laser-Sendeempfänger 111 zum Aussenden eines Lasersignals L (s. Fig. 3A-C) und zum Empfangen eines von dem Objekt 2 reflektierten Lasersignals sowie eine an den Laser-Sendeempfänger 111 gekoppelte Auswerteeinheit 112, die ausgebildet ist, das Messsignal 119 bereitzustellen, wobei das Messsignal 119 für den Abstand R zwischen dem Objekt 2 und der Kameraeinheit 10 indikativ ist.

Die Messeinheit 11 ist beispielsweise ausgebildet, das Messsignal 119 mit einer Rate von mindestens 200 Hz wiederzugeben, also wenigstens zweihundertmal pro Sekunde eine Abstandsmessung vorzunehmen, und entsprechend das Messsignal 119 wenigstens zweihundertmal pro Sekunde zu aktualisieren. Dabei kann das Messsignal 119 als ein digitales Signal ausgegeben werden, welches beispielsweise ein Format aufweist, das durch einen Kommunikationsstandard, der auch ein proprietärer Kommunikationsstandard sein kann, vorgegeben ist. Bei einer Ausführungsform ist gewährleistet, dass (hier nicht dargestellte) Signalverarbeitungsmittel des Kamera-Controllers 16 der Kameraeinheit 10 das Messsignal 119 korrekt empfangen und auslesen können und, optional, darauf basierend eine automatische Einstellung der Kameraeinheit 10, beispielsweise die automatische Einstellung der Bildschärfe, vornehmen können.

Die Grundprinzipien einer laserbasierten Entfernungsmessung sind aus dem Stand der Technik bekannt, so dass hier die Einzelheiten der Auswerteeinheit 112 sowie deren Ankopplung an den Laser-Sendeempfänger 111 mit Blick auf diese Grundprinzipien nicht näher einzugehen ist.

Allgemein ist jedoch nicht jedes laserbasierte Entfernungsmesssystem in jedem Anwendungsfall ideal, sondern nur ganz bestimmten Szenarien. Beispielsweise eignen sich einige laserbasierte Entfernungsmesssysteme zur Messung größerer Entfernungen, andere wiederum für die Messung kleinerer Entfernungen.

Das Kamerasystem 1 wird jedoch mitunter in einer Vielzahl unterschiedlicher Anwendungsfälle eingesetzt, sodass es an sich wünschenswert ist, auch die Messeinheit 11 auf den jeweiligen Anwendungsfall anzupassen bzw. einzustellen. Für diese Zwecke ist es aus der bereits eingangs genannten Druckschrift US 9,377,302 B2 bekannt, eine modulare Messeinheit vorzusehen, bei der einzelne Linsen der Messeinheit manuell entnommen und/oder durch eine andere ersetzt werden können. Dieser Ansatz erweist sich jedoch als unpraktisch, da zum einen Austauschlinsen stets mitgeführt werden müssen und der manuelle Aufwand zum Wechseln der Linsen erheblich ist. Darüber hinaus kann das Linsensystem durch die notwendigen Wechsel der Linsen beschädigt und/oder beschmutzt werden, was zu einer geringen Lebensdauer und/oder höheren Fehleranfälligkeit des Systems führen kann. Je nach Anzahl der Wechsellinsen kann ein derartiges modulares System auch hochpreisig sein. Außerdem ist beispielsweise bei Dunkelheit nicht oder zumindest nicht leicht erkennbar, welchen Typ die Wechsellinse aufweist und so kann es (nämlich bei Wahl des falschen Typs) zu Fehleinstellungen bei der vorbekannten Messeinheit kommen und somit zu Messfehlern und damit zu Fehleinstellungen der Kamera; die Qualität der Aufnahme würde sich verschlechtern.

Vor diesem Hintergrund ist bei der Messeinheit 11 des hier vorgestellten Kamerasystems 1 ein Linsensystem 113 vorgesehen, das wenigstens zwei voneinander beabstandete Linsen 1131, 1132 aufweist, durch die das von dem Laser-Sendeempfänger 111 ausgesendete Lasersignal L tritt. Wenigstens eine der Linsen 1131, 1132 ist beweglich angeordnet, so dass der Abstand D zwischen den wenigstens zwei Linsen 1131, 1132 parallel zu der Lasersignalsenderichtung variabel einstellbar ist. Dies erlaubt eine einfache Einstellung der Messeinheit 11 auf den jeweiligen Anwendungsfall, und es ist nicht notwendig, Linsen manuell auszutauschen.

Die Einstellbarkeit des Abstands D zwischen den beiden Linsen 1131, 1132 kann auf verschiedene Weisen realisiert werden. Zunächst ist möglich, dass nur eine der beiden Linsen 1131, 1132 beweglich angeordnet ist. Bei einer anderen Ausführungsform sind beide Linsen 1131, 1132 parallel zu der Lasersignalsenderichtung unabhängig voneinander beweglich angeordnet.

Bei einer Ausführungsform ist der Abstand D zwischen den beiden Linsen 1131, 1132 stufenlos einstellbar, womit insbesondere auch die Breite B des an einer Frontlinse 1333 ausgegebenen linienförmigen Lasersignals, also die Aufweitung des Laserstrahls, stufenlos einstellbar sein kann, was weiter unten näher beschrieben werden wird.

Die Messeinheit 11 kann außerdem eine Elektroantriebsanordnung 114 aufweisen, die zur Einstellung des Abstands D zwischen den beiden Linsen 1131, 1132 ausgebildet und angeordnet ist. Zum Beispiel umfasst die Elektroantriebsanordnung 114 einen Linearmotor, der eine Achse, auf welcher eine der beiden Linsen 1131, 1132 angeordnet ist, parallel zu der Lasersignalsenderichtung führt.

Zu dem Kamerasystem 1 kann ferner eine Fernsteuerung 115 gehören, wobei die Elektroantriebsanordnung 114 ausgebildet sein kann, auf Basis eines von der Fernsteuerung 115 ausgegebenen Steuersignals den Abstand zwischen den wenigstens zwei Linsen 1131, 1132 einzustellen. Alternativ oder zusätzlich kann ein derartiges Steuersignal aber auch durch eine Benutzerschnittstelle (nicht dargestellt) des Kamerasystems 1 und/oder der Kameraeinheit 10 und/oder durch aktuelle Betriebsparameter der Kameraeinheit 10 bereitgestellt werden. Beispielsweise liegt es im Rahmen der Erfindung, dass der Abstand D zwischen den beiden Linsen 1131, 1132 automatisch in Abhängigkeit von einer aktuellen Einstellung der Kameraeinheit 10 eingestellt wird.

Gemäß einer Ausführungsform ist der Kamera-Controller 116 an die Messeinheit 11 gekoppelt und ausgebildet, der Messeinheit 11 ein Controller-Signal 1161 zuzuführen. Basierend auf dem Controller-Signal 1161 kann eine automatische Einstellung der Messeinheit 11 erfolgen. Z.B. ist der Kamera-Controller 116 ausgebildet, (z.B. in Abhängigkeit von einer gegenwärtigen Brennweiteneinstellung der Kameraeinheit 10) den Abstand D zwischen den beiden Linsen 1131 und 1132 mittels des Controller-Signals 1161 einzustellen. Alternativ oder zusätzlich ist der Kamera-Controller 116 bei einer Ausführungsform ausgebildet, (z.B. in Abhängigkeit von einer gegenwärtigen Fokus-Einstellung der Kameraeinheit 10) eine Sendeleistung des Laser-Sendeempfängers 111 mittels des Controller-Signals 1161 einzustellen. Auf diese Weise kann der Kamera-Controller 116 beispielsweise bei dem Laser-Sendeempfänger 111 eine Automatic-Gain-Control- (AGC-) Reglung umsetzen. Der Laser-Sendeempfänger 111 kann bei einer Ausführungsform also hinsichtlich der Sendeleistung einstellbar sein. Es versteht sich, dass zur Messung größerer Abstände R eine höhere Sendeleistung zweckmäßig sein kann als zur Messung kleinerer Abstände R.

Darüber hinaus kann das Linsensystem 113 der Messeinheit 11 ausgebildet sein, das Lasersignal als ein linienförmiges (und nicht als punktförmiges) Lasersignal auszugeben. Dies erlaubt in bestimmten Anwendungsfällen eine einfachere und genauere Abstandsmessung, beispielsweise, wenn das Kamerasystem 1 als Handkamerasystem ausgebildet ist und entsprechend schwierig die genaue Ausrichtung des Lasersignals auf das Objekt 2 ist. Gleichzeitig kann die Messeinheit 11 aber derart ausgestaltet sein, dass auch die Möglichkeit der Ausgabe des Lasersignals als ein punktförmiges Lasersignal erhalten bleibt. In gewissen Anwendungsfällen kann dies vorteilhaft sein.

Zum Beispiel weist das linienförmige Lasersignal bei Austritt aus der Messeinheit 11 eine (Orts-)Breite B von wenigstens 5 mm auf. Das Linsensystem 113 kann eine die Messeinheit 11 abschließende Frontlinse 1133 aufweisen, durch die das Lasersignal aus der Messeinheit 11 austritt. An dieser Stelle weist das Lasersignal die besagte Breite B auf, wobei vorliegend unter dem Begriff "Breite" die Länge des linienförmigen Lasersignals zu verstehen ist, z.B. ein Maß für die Aufweitung des Lasersignals in Gestalt eines Laserstrahls.

Die Frontlinse 1133 ist z.B. als Planglaslinse ausgestaltetet und bewirkt keine weitere Strahlaufweitung (oder Strahlverjüngung).

Wie anhand der Fig. 3A-C noch näher erläutert werden wird, kann die Breite des linienförmigen Lasersignals an der Frontlinse 1133 von einem Aufweitungswinkel (Divergenz) an der zweiten Linse 1132 abhängen. Dieser liegt bspw. im Bereich von 0 bis 10° und hängt z.B. von dem Abstand D zwischen der ersten Linse 1131 und der zweiten Linse 1132 ab.

Das Linsensystem 113 ist z.B. derart angeordnet und ausgebildet, dass es an der Frontlinse 1133 zu keinem Intensitätsmaximum kommt. Dies erhöht die Sicherheit für den Benutzer des Kamerasystems 1 sowie für weitere Personen, die sich im Umfeld des Kamerasystems 1 bewegen.

Beispielsweise kreuzt das Lasersignal nach Austritt aus der Frontlinse 1133 hiernach keine weitere Komponente der Messeinheit 11 mehr, sondern trifft direkt auf das Objekt 2. Letzterer Aspekt schließt indessen nicht aus, dass außerhalb der Messeinheit 11 noch eine (nicht dargestellte) Vorsatzlinse angeordnet werden kann. Aber auch aufgrund der zueinander beweglich angeordneten wenigstens zwei Linsen 1131, 1132 muss diese Vorsatzlinse nicht notwendigerweise in Abhängigkeit des Anwendungsfalls ausgetauscht werden; vielmehr kann das Kamerasystem 1 mit nur einer einzigen Vorsatzlinse auskommen, die fix montiert sein kann. Zum Beispiel ist diese Vorsatzlinse fix und umweltdicht an der Messeinheit 11 montiert.

Die örtliche Breite und/oder Divergenz (Winkelaufweitung) des linienförmigen Lasersignals kann durch Verstellung des Abstands D zwischen den wenigstens zwei Linsen 1131, 1132 einstellbar sein. Dabei kann die Messeinheit 11 weiter ausgebildet sein, ein zweites Messsignal 118 bereitzustellen, das indikativ für die Breite B des linienförmigen Lasersignals und/oder für den Abstand D zwischen den beiden Linsen (1131, 1132) ist. Dieses zweite Messsignal 118 kann beispielsweise den (hier nicht dargestellten) Signalverarbeitungsmitteln des Kamera-Controllers 116 der Kameraeinheit 10 zugeführt sein, der z.B. basierend auf diesem zweiten Messsignal 118 eine automatische Einstellung der Kameraeinheit 10 veranlassen können. Über dies kann basierend auf dem zweiten Messsignal 118 eine Plausibilitätsprüfung erfolgen.

Die beiden Linsen 1131, 1132 können identisch zueinander ausgebildet sein. Beispielsweise ist jede der beiden Linsen 1131, 1132 eine Azylinderlinse. Die Linsen können jeweils als sphärische oder als asphärische Linse ausgebildet sein. Beispielsweise sind beide Linsen 1131, 1132 rotationssymmetrisch ausgebildet, wobei eine asphärische Linse z.B. kein kreissegmentförmiges Querschnittsprofil aufweist.

Gemäß einer anderen Ausführungsformen sind die beiden Linsen 1131 und 1132 jeweils als Linsenarray ausgebildet und jeweils mit einer Vielzahl Einzellinsen (sog. "Lenslets" versehen). Z.B. sind bei dem Ausführungsbeispiel gemäß den Fig. 3A-C die beiden Linsen 1131 und 1132 jeweils als Linsenarray mit fünf Einzellinsen ausgebildet. Durch das Vorsehen von Einzellinsen können lokale Maxima von Leistungsdichten in dem Linsensystem 113 reduziert werden und/oder das Linsensystem 113 mit geringerem Bauvolumen bereitgestellt werden.

Gemäß einer noch weiteren Ausführungsform sind die wenigstens zwei Linsen 1131, 1132 entlang einer Richtung senkrecht zur optischen Achse des Linsensystem 113 relativ zueinander verschiebbar angeordnet, bspw. in einer horizontalen und/oder einer vertikalen Richtung senkrecht zur optischen Achse. Beispielsweise umfasst die Messeinheit ein (in den Zeichnungen nicht dargestelltes) Verstellelement, das zur Bewirkung der relativen Verschiebung senkrecht zur optischen Achse ausgebildet ist. Durch die besagte Verschiebung kann z.B. bei im Übrigen unveränderter Position und Ausrichtung des Kamerasystems 1 das Lasersignal am Objekt 2 verschoben werden. Dies erlaubt bspw. ein Abscannen des Objekts 2, bspw. die Erstellung eines Entfernungsprofils. Auch ein solches Entfernungsprofil kann bei einer Ausführungsform durch das Messsignal 118 wiedergegeben werden und z.B. an den Kamera-Controller 116 kommuniziert werden. Das Verstellelement kann bspw. einen Piezo-Antrieb umfassen, um auch kleine und exakte relative Verschiebungen zu bewirken, bspw. Unterschiede von weniger als einem Millimeter. Bei einer Ausführungsform ist die erste Linse 1311 ortsfest angeordnet und die zweite Linse 1312 nicht nur entlang der optischen Achse (also entlang der Lasersignalrichtung) beweglich, sondern auch in einer Richtung senkrecht hierzu. Z.B. wird das Verstellelement zur Bewirkung besagter relativer Verschiebung durch die Elektroantriebsanordnung 114 gleichsam mit der zweiten Linsen 1312 bewegt, wenn eine Einstellung des Abstands D erfolgt.

Alternativ oder zusätzlich zu der im vorgehenden Absatz beschriebenen relativen Verschiebung der wenigstens zwei Linsen 1131, 1332 entlang der Richtung senkrecht zur optischen Achse des Linsensystem 113 kann der Laser-Sendeempfänger 111 und/oder eine Komponente davon, wie z.B. eine Sendediode und/oder eine Empfangsdiode, senkrecht zur optischen Achse des Linsensystem 113 verschiebbar angeordnet sein. Auch durch diese Art der Verschiebung kann z.B. bei im Übrigen unveränderter Position und Ausrichtung des Kamerasystems 1 das Lasersignal am Objekt 2 verschoben werden. Dies erlaubt bspw. ein Abscannen des Objekts 2, bspw. die Erstellung eines Entfernungsprofils. Zur Erzielung dieser Möglichkeit wäre es auch denkbar, zwischen den wenigstens zwei Linsen 1131, 1332 ein Prisma und/oder ein verdrehbares Planglas einzusetzen.

Die Messeinheit 11 kann ausgebildet sein, ortsfest in dem Kamerasystem 1 befestigt zu werden. Zum Beispiel ist bei dem Kamerasystem 1 eine Ankopplungsstelle vorgesehen, die die Ankopplung der Messeinheit 11 an einer mit Bezug auf die Position der Kameraeinheit 10 definierten Position erlaubt. Je nachdem, wie die Kameraeinheit 10 relativ zur Messeinheit 11 angeordnet ist, kann bei der Auswerteeinheit 112, die das Messsignal 119 ausgibt, welches den Abstand zwischen der Kameraeinheit 10 und dem Objekt 2 angibt, ein Offset-Wert hinterlegt sein, der den relativen Abstand zwischen der Kameraeinheit 10 und der Messeinheit 11 angibt. Die Auswerteeinheit 112 kann ausgebildet sein, diesen Offset-Wert bei der Erzeugung des Messsignals 119 zu berücksichtigen. Alternativ kann ein derartiger Offset-Wert auch in den Signalverarbeitungsmitteln des Kamera-Controllers 116 der Kameraeinheit 10 vorgesehen sein.

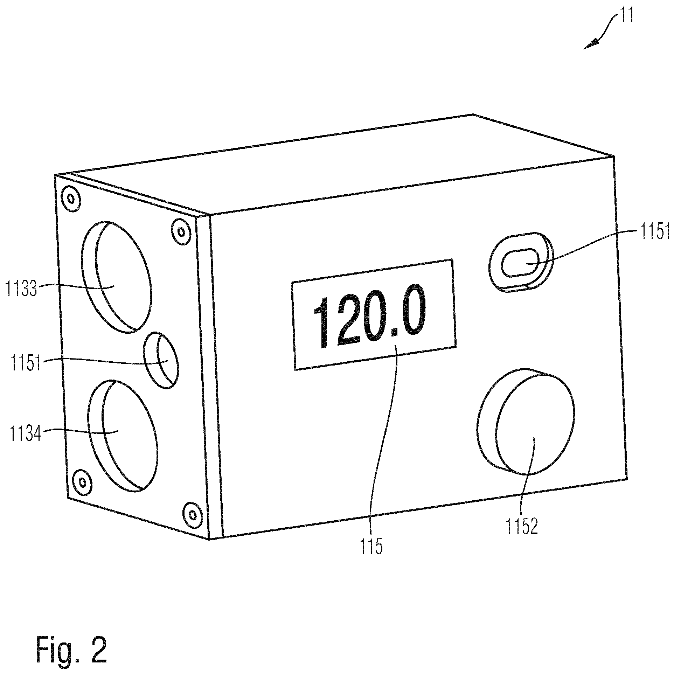

Die Fig. 2 zeigt schematisch und exemplarisch eine mögliche Ausführungsform der Messeinheit 11. Generell kann vorgesehen sein, dass die Messeinheit 11 separat und auch unabhängig von dem Kamerasystem 1 hergestellt und vertrieben wird. Z.B. kann die Messeinheit 11 ausgebildet sein, in unterschiedlichen Kamerasystemen eingesetzt zu werden. Beispielsweise weist die Messeinheit 11 eine mechanische Koppelstelle auf, die auch genormt sein kann, so dass die Ankopplung der Messeinheit 11 in unterschiedlichen Kamerasystemen gelingt. Außerdem kann die Messeinheit 11 eine Kommunikationsschnittstelle (hier nicht gezeigt) umfassen, welche zumindest für die Übertragung des Messsignals 119 an den Kamera-Controller der Kameraeinheit 10 ausgebildet sein kann und optional auch für den Empfang des Controller-Signals 1161. Die datentechnische Ankopplung der Messeinheit 11 an die Kameraeinheit 10 kann beispielsweise über ein oder mehrere Kabel oder drahtlos erfolgen.

Die Messeinheit 11 kann außerdem eine Anzeigeeinheit 117 aufweisen, die ausgebildet ist, auf Basis des Messsignals 118 den Abstand R zum Objekt 2 optisch anzuzeigen. So kann ein Benutzer des Kamerasystems 1 stets erkennen, in welchem Abstand sich die Kameraeinheit 10 zum Objekt 2 befindet. Außerdem kann die Messeinheit 11 Bedienelemente 1151, 1152 umfassen. Beispielsweise kann über das Bedienelement 1151 eine Anzeigeeinstellung der Anzeigeeinheit 117 geändert werden. Über das Bedienelement 1152 kann z.B. der oben beschriebene Offsetwert eingestellt werden und/oder der Abstand D.

Somit soll verstanden werden, dass bei einer Ausführungsform das Messsignal 119 angezeigt wird, aber nicht notwendigerweise eine automatische Einstellung der Kameraeinheit 10 auf Basis des Messsignals 119 erfolgen muss. Es liegt z.B. noch im Rahmen der Erfindung, dass auf Basis des angezeigten Messsignals 119 ein Nutzer des Kamerasystems 1 eine manuelle Einstellung der Kameraeinheit 10 vornimmt. Bei einer anderen Ausführungsform wird das Messsignal 119 dem Kamera-Controller 116 der Kameraeinheit 10 bereitgestellt, und der Kamera-Controller 116 der Kameraeinheit 10 nimmt, unter Verwendung von Signalverarbeitungsmitteln und/oder eines elektromechanischen Verstellmechanismus, eine automatische Einstellung des wenigstens einen relevanten Parameters vor. Beispielsweise erfolgt mittels eines Objektivmotors eine automatische Brennweiten-Einstellung auf Basis des Messsignals 119, wie oben erläutert worden ist.

Nach einer Ausführungsform stellt die Messeinheit für den Sende-Laserstrahl einen ersten Strahlenweg bereit (der bspw. das Linsensystem 113 mit den Linsen 1131, 1132 und 1133 durchquert) und für den (vom Objekt 2) reflektierten Empfangs-Laserstrahl einen zweiten Strahlenweg, der bspw. eine Eingangslinse 1134 durchquert. Die Aufteilung in zwei getrennte Strahlenwege für Sende-Laserstrahl und Empfangs-Laserstrahl kann sinnvoll sein, da der Sende-Laserstrahl bspw. weitgehend polarisiert ist, wohingegen der Empfangs-Laserstrahl üblicherweise unpolarisiert (diffus) ist. Bei einer anderen Ausführungsform durchlaufen Sende-Laserstrahl und Empfangs-Laserstrahl wenigstens teilweise dieselben optischen Komponenten der Messeinheit 11; z.B. ist im ersten Strahlenweg ein Polarisationsstrahlteiler vorgesehen, der den Sende-Laserstrahl ohne Richtungswechsel passieren lässt und den Empfangs-Laserstrahl (reflektiertes Lasersignal) in den zweiten Strahlenweg lenkt.

Über den Auslass 1151 wird bspw. ein Lasersignal mit geringer Leistung ausgeben, bspw. für die Zwecke des Zielens, bevor das eigentlich Mess-Lasersignal ausgegeben wird. Dieses Lasersignal liegt bspw. im sichtbaren Spektrum und weist z.B. eine Wellenlänge von 905 nm auf. Beispielsweise ist dieses Lasersignal so ausgestaltet, dass es nicht von einem Bildsensor detektiert wird.

Weiter veranschaulichen die Fig. 3A-C schematisch und exemplarisch eine Ausführungsform des Linsensystems 113 mit unterschiedlichen Abständen D zwischen den beiden Linsen 1131, 1132. Das von dem Laser-Sendeempfänger 111 ausgegebene Lasersignal L tritt zunächst durch die erste Linse 1131, wonach es eine erste Verbreiterung erfahren kann (s. Fig. 3A, B und C). Sodann legt das Lasersignal die variable Strecke D zurück, bis es auf die zweite Linse 1132 trifft. Je nachdem, wie weit die beiden Linsen 1131 und 1132 voneinander entfernt sind und/oder je nachdem, wie die zweite Linse 1132 ausgestaltet ist, erfährt das Lasersignal entweder keine weitere Verbreiterung (Variante gemäß Fig. 3A), eine mittelmäßige Verbreiterung (Variante gemäß Fig. 3B) oder eine eher stärkere Verbreiterung (Variante gemäß Fig. 3C). Wie gesagt, der Abstand D zwischen den beiden Linsen 1131 und 1132 kann stufenlos einstellbar sein. Dadurch, dass der Abstand D zwischen den beiden Linsen 1131 und 1132 einstellbar ist, kann z.B. die Divergenz eines breiten Strahls mit wenig Verstellweg und in kleinem Bauraum stark verändern werden, wie in den Fig. 3A-C durch die unterschiedlichen Breiten des linienförmigen Lasersignals bei Austritt aus der Frontlinse 1113 veranschaulicht ist.

Es liegt auch im Rahmen der vorliegenden Erfindung, dass der Laser-Sendeempfänger 111 und das Linsensystem 112 gemäß einem Autokollimationsaufbau angeordnet sind.

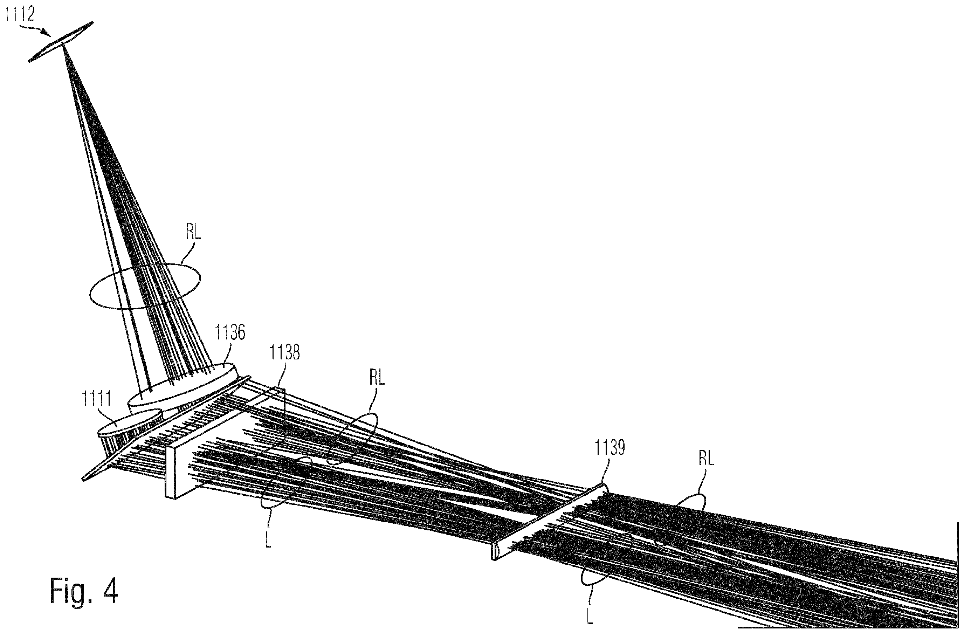

Wie in Fig. 4 schematisch und exemplarisch veranschaulicht, umfasst der Laser-Sendeempfänger 111 z.B. ein Sendeteil 1111, das das Lasersignal L ausgibt, und ein Empfangsteil 1112, das das reflektierte Lasersignal RL empfängt. Sowohl das Sendeteil 1111 als auch das Empfangsteil 1112 sind z.B. an die Auswerteeinheit 112 gekoppelt.

Bereits weiter oben wurde erläutert, dass das Linsensystem 113 der Messeinheit 11 ausgebildet sein kann, das Lasersignal L als linienförmiges Lasersignal L auszugeben. Auch ein solches linienförmiges Lasersignal L ist in der Fig. 4 veranschaulicht (s. rechter Teil der Zeichnung). Das von dem Objekt 2 reflektierte Lasersignal RL ist dann folglich ebenfalls linienförmig, wie auch in der Fig. 4 veranschaulicht ist.

Die Erfassung des von dem Objekt 2 reflektierten Lasersignals RL bildet die Basis die Ermittlung der korrekten Entfernung R. Das reflektierte Lasersignal RL wird dem Empfangsteil 1112 des Laser-Sendeempfängers 111 zugeführt, bspw. einer Sensoroberfläche des Empfangsteil 1112. Um eine kleine Bauform des Empfangsteils 1112 zu ermöglichen, kann es vorteilhaft sein, das ursprünglich linienförmige reflektierte Lasersignal RL in ein im Wesentlichen punktförmiges Lasersignal zu überführen.

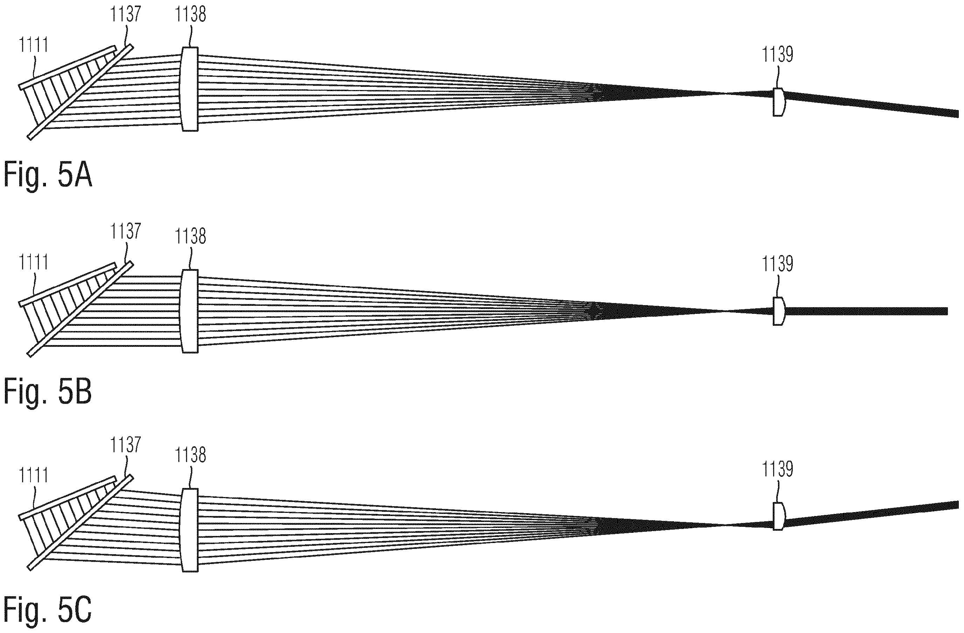

Das Linsensystem 113 umfasst z.B. ein Prisma oder ein Beugungsgitter 1137 sowie eine erste Zylinderlinse 1138. Das Prisma oder Beugungsgitter 1137 empfängt das von dem Sendeteil 1111 ausgegebene Lasersignal leitet es, je nach Wellenlänge, in verschiedene Richtungen an die erste Zylinderlinse 1138 weiter. Diese wellenlängenabhängige Weiterleitung ist in den Fig. 5A-C veranschaulicht. Ein erster Anteil des von dem Sendeteil 1111 ausgegebenen Lasersignals in einem ersten Wellenlängenbereich wird bspw. mit in einem positiven Winkel zur optischen Achse an die erste Zylinderlinse 1138 weitergeleitet (Fig. 5A). Ein zweiter Anteil des von dem Sendeteil 1111 ausgegebenen Lasersignals in einem zweiten Wellenlängenbereich wird bspw. mit in einem negativen Winkel zur optischen Achse an die erste Zylinderlinse 1138 weitergeleitet (Fig. 5C). Ein dritter Anteil des von dem Sendeteil 1111 ausgegebenen Lasersignals in einem dritten Wellenlängenbereich, der zwischen dem ersten und dem zweiten Wellenlängenbereich liegt, wird bspw. im Wesentlichen parallel zur optischen Achse an die erste Zylinderlinse 1138 weitergeleitet (Fig. 5B).

Das Linsensystem 113 kann weiter eine zweite Zylinderlinse 1139 umfassen. Die zweite Zylinderlinse 1139 ist bspw. in einem festen Abstand zur ersten Zylinderlinse 1138 angeordnet. Da das Lasersignal in unterschiedlichen Richtungen auf die erste Zylinderlinse 1138 treffen kann, wird das Lasersignal auch entsprechend zur zweiten Zylinderlinse 1139 weitergeleitet. So trifft der erste Anteil des ersten Wellenlängenbereichs auf einen oberen Anteil der zweiten Zylinderlinse 1139 (Fig. 5A), der zweite Anteil des zweiten Wellenlängenbereichs auf einen unteren Anteil der zweiten Zylinderlinse 1139

(Fig. 5C), und der dritte Anteil des dritten Wellenlängenbereichs auf einen mittleren Anteil der zweiten Zylinderlinse 1139 (Fig. 5B).

Die zweite Zylinderlinse 1139 gibt folglich ein linienförmiges Lasersignal aus, das sich als Kombination der in den Fig. 5A-C veranschaulichten Ausgangs-Laserstrahlen (die Strahlen, die die zweite Zylinderlinse 1139 verlassen) vorstellen lässt. Das linienförmige Lasersignal ist mit Blick auf die spektrale Verteilung hinsichtlich seiner Breite inhomogen ausgestaltet. Z.B. ändert sich der dominante Wellenlängenanteil kontinuierlich entlang der Breite des linienförmigen Lasersignals.

Wieder bezugnehmend auf das Ausführungsbeispiel gemäß der Fig. 4 kann das reflektierte Lasersignal RL denselben Strahlenweg nehmen wie das ausgesendete Lasersignal L, nur in umgekehrter Richtung. Insbesondere durchläuft das reflektierte Lasersignal bei einer Ausführungsform zunächst die zweite Zylinderlinse 1139, die erste Zylinderlinse 1138 und sodann das Beugungsgitter oder Prisma 1137. Hiernach trifft das reflektierte Lasersignal auf eine weitere Linse 1136 des Linsensystems 113, welches ein in seiner Breite vermindertes reflektiertes Lasersignal zum Empfangsteil 1112 leitet.

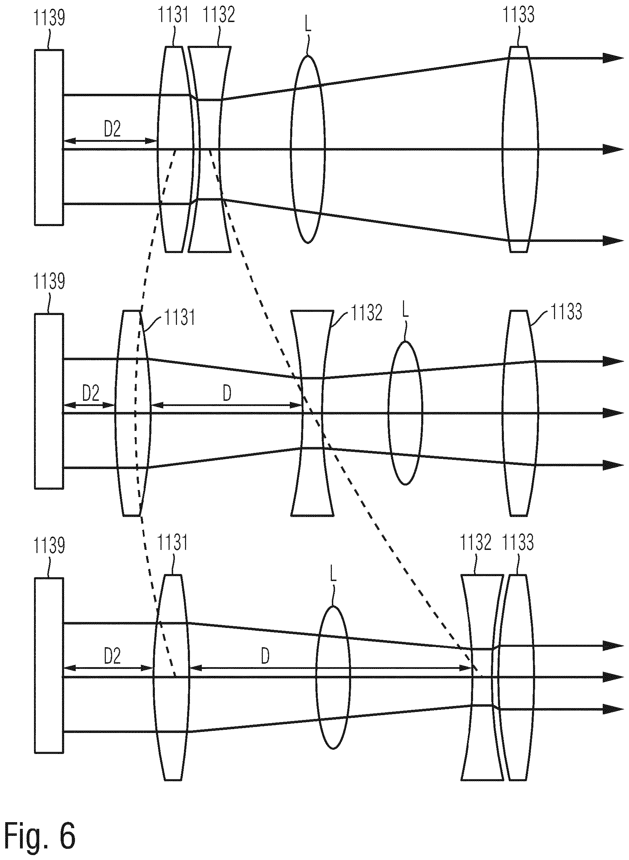

Gemäß dem Ausführungsbeispiel der Fig. 6 wird das von der zweiten Zylinderlinse 1139 ausgegebene linienförmige Lasersignal der oben beispielhaft beschriebenen Anordnung mit der ersten Linse 1131 und der zweiten Linse 1132 sowie der Frontlinse 1333 zugeführt, wobei zumindest der Abstand D zwischen den beiden Linsen 1131 und 1132 einstellbar ist. Darüber hinaus ist bei einer Ausführungsform auch der Abstand D2 zwischen der zweiten Zylinderlinse 1139 und der ersten Linse 1131 variable einstellbar.

Bei einer Ausführungsform bildet die Anordnung aus er ersten Linse 1131 und der zweiten Linse 1132 sowie der Frontlinse 1333 ein afokales Zoom-System des Linsensystem 113 aus. Beispielsweise ist das afokale Zoom-System ausgebildet, das linienförmige Lasersignal mit variabler Breite auszugeben.

Wie hier verwendet, sind die Begriffe "habend", "enthaltend", "einschließend", "umfassend", "aufweisend" und ähnliches offene Begriffe, welche das Vorhandensein von angeführten Elementen oder Merkmalen anzeigen, zusätzliche Elemente oder Merkmale jedoch nicht ausschließen.

In Anbetracht des obigen Bereichs von Variationen und Anwendungen wird darauf hingewiesen, dass die vorliegende Erfindung nicht durch die vorangegangene Beschreibung eingeschränkt wird, und auch nicht durch die begleitenden Zeichnungen eingeschränkt wird. Die vorliegende Erfindung ist vielmehr lediglich durch die folgenden Ansprüche und deren legale Äquivalente eingeschränkt.

## Patentansprüche

1. Kamerasystem (1), umfassend:
- eine Kameraeinheit (10) zum Erfassen von Steh- und/oder Bewegtbildern eines Objekts (2), wobei die die Kameraeinheit (10) hinsichtlich wenigstens eines für die Erfassung der Steh- und/oder Bewegtbilder relevanten Parameters auf Basis eines Messsignals (119) einstellbar ist;
- eine Messeinheit (11) zum Erfassen eines Abstands (R) zwischen dem Objekt und der Kameraeinheit (10), wobei die Messeinheit (11) aufweist:
(i) einen Laser-Sendeempfänger (111) zum Aussenden eines Lasersignals (L) und zum Empfangen eines von dem Objekt reflektierten Lasersignals;
(ii) eine an den Laser-Sendeempfänger (111) gekoppelte Auswerteeinheit (112), die ausgebildet ist, das Messsignal (119) bereitzustellen, wobei das Messsignal (119) für den Abstand (R) zwischen dem Objekt und der Kameraeinheit (10) indikativ ist; und
(iii) ein Linsensystem (113), das wenigstens zwei voneinander beabstandete Linsen (1131, 1132) aufweist, durch die das von dem Laser-Sendeempfänger (111) ausgesendete Lasersignal (L) tritt, wobei wenigstens eine der Linsen (1131, 1132) beweglich angeordnet ist, so dass der Abstand (D) zwischen den wenigstens zwei Linsen (1131, 1132) parallel zu der Lasersignalsenderichtung variabel einstellbar ist.

2. Kamerasystem (1) nach Anspruch 1, wobei das Linsensystem (113) der Messeinheit (11) ausgebildet ist, das Lasersignal als linienförmiges Lasersignal auszugeben.

3. Kamerasystem (1) nach Anspruch 2, wobei das linienförmige Lasersignal bei Austritt aus der Messeinheit (11) eine Breite (B) von wenigstens 5 mm aufweist.

4. Kamerasystem (1) nach Anspruch 3, wobei die Divergenz und/oder Breite des linienförmigen Lasersignals durch Verstellung des Abstands (D) zwischen den wenigstens zwei Linsen (1131, 1132) einstellbar ist.

5. Kamerasystem (1) nach einem der vorstehenden Ansprüche 2 bis 4, wobei die Messeinheit (11) ausgebildet ist, ein zweites Messsignal (118) bereitzustellen, das indikativ für die Breite (B) des linienförmigen Lasersignals und/oder für den Abstand (D) zwischen den wenigstens zwei Linsen (1131, 1132) ist.

6. Kamerasystem (1) nach einem der vorstehenden Ansprüche, wobei der Abstand (D) zwischen den wenigstens zwei Linsen (1131, 1132) stufenlos einstellbar ist.

7. Kamerasystem (1) nach einem der vorstehenden Ansprüche, wobei der Laser-Sendeempfänger (111) und das Linsensystem (112) gemäß einem Autokollimationsaufbau angeordnet sind.

8. Kamerasystem (1) nach einem der vorstehenden Ansprüche, wobei die wenigstens zwei Linsen (1131, 1132) identisch zueinander ausgebildet sind.

9. Kamerasystem (1) nach einem der vorstehenden Ansprüche, wobei jede der wenigstens zwei Linsen (1131, 1132) als Azylinderlinse ausgebildet ist.

10. Kamerasystem (1) nach einem der vorstehenden Ansprüche, wobei die Messeinheit (11) eine Elektroantriebsanordnung (114) aufweist, die zur Einstellung des Abstands (D) zwischen den wenigstens zwei Linsen (1131, 1132) ausgebildet ist.

11. Kamerasystem (1) nach Anspruch 10, weiter umfassend eine Fernsteuerung (15), wobei die Elektroantriebsanordnung (114) ausgebildet ist, auf Basis eines von der Fernsteuerung (15) ausgegebenen Steuersignals den Abstand (D) zwischen den wenigstens zwei Linsen (1131, 1132) einzustellen.

12. Kamerasystem (1) nach einem der vorstehenden Ansprüche, wobei das Linsensystem (113) weiter eine Frontlinse (1133) aufweist, durch die das Lasersignal aus der Messeinheit (11) austritt, sodass es ohne weitere Kreuzung einer Komponente der Messeinheit (11) auf das Objekt treffen kann.

13. Kamerasystem (1) nach einem der vorstehenden Ansprüche, wobei der wenigstens eine für die Erfassung der Steh- und/oder Bewegtbilder relevante Parameter folgendes ist: eine Bildschärfe, eine Auflösung, eine Brennweite, ein Fokus, eine Linsenposition, oder ein Steuerparameter betreffend die Bildstabilisation.

14. Kamerasystem (1) nach einem der vorstehenden Ansprüche, wobei die Messeinheit (11) ausgebildet ist, ortsfest in dem Kamerasystem (1) befestigt zu werden.

15. Kamerasystem (1) nach einem der vorstehenden Ansprüche, wobei die Messeinheit (11) eine Anzeigeeinheit (115) aufweist, die ausgebildet ist, auf Basis des Messsignals (119) den Abstand (R) optisch anzuzeigen.

16. Kamerasystem (1) nach einem der vorstehenden Ansprüche, wobei die Kameraeinheit (10) einen Kamera-Controller (116) umfasst, der an die Messeinheit (11) gekoppelt ist und ausgebildet ist, das Messsignal (119) zu empfangen und/oder der Messeinheit (11) ein Controller-Signal (1161) bereitzustellen.

17. Kamerasystem (1) nach Anspruch 16, wobei der Kamera-Controller (116) ausgebildet ist, mittels des Controller-Signals (1161) wenigstens eines von einer Sendeleistung des Laser-Sendeempfängers (111) und dem Abstand (D) zwischen den beiden Linsen (1131, 1132) des Linsensystems (113) einzustellen.

18. Kamerasystem (1) nach einem der vorstehenden Ansprüche, wobei die wenigstens zwei Linsen (1131, 1132) entlang einer Richtung senkrecht zur optischen Achse des Linsensystems (113) relativ zueinander verschiebbar angeordnet sind.

19. Kamerasystem (1) nach einem der vorstehenden Ansprüche, wobei das Linsensystem (113) ein Beugungsgitter oder Prisma (1137) umfasst, durch das das Lasersignal hindurchtritt, bevor es auf die wenigstens zwei Linsen (1131, 1132) trifft.

20. Kamerasystem (1) nach einem der vorstehenden Ansprüche, wobei das Linsensystem (113) ein afokales Zoom-System umfasst.

## Claims

1. Camera system (1), comprising:
- a camera unit (10) for capturing still and/or motion images of an object (2), wherein the camera unit (10) is adjustable, based on a measurement signal (119), with respect to at least one parameter that is relevant for capturing the still and/or motion images;
- a measurement unit (11) for capturing a distance (R) between the object and the camera unit (10), wherein the measurement unit (11) has:
(i) a laser transceiver (111) for transmitting a laser signal (L) and for receiving a laser signal reflected by the object;
(ii) an evaluation unit (112) that is coupled to the laser transceiver (111) and is embodied to provide the measurement signal (119), wherein the measurement signal (119) is indicative of the distance (R) between the object and the camera unit (10); and
(iii) a lens system (113) having at least two lenses (1131, 1132) that are arranged at a distance from one another and through which the laser signal (L) transmitted by the laser transceiver (111) passes, wherein at least one of the lenses (1131, 1132) is arranged to be movable so that the distance (D) between the at least two lenses (1131, 1132) is variably adjustable parallel to the laser signal transmission direction.

2. Camera system (1) according to Claim 1, wherein the lens system (113) of the measurement unit (11) is embodied to output the laser signal as a line-shaped laser signal.

3. Camera system (1) according to Claim 2, wherein the line-shaped laser signal upon exiting the measurement unit (11) has a width (B) of at least 5 mm.

4. Camera system (1) according to Claim 3, wherein the divergence and/or width of the line-shaped laser signal is adjustable by changing the distance (D) between the at least two lenses (1131, 1132).

5. Camera system (1) according to one of the preceding Claims 2 to 4, wherein the measurement unit (11) is embodied to provide a second measurement signal (118) that is indicative of the width (B) of the line-shaped laser signal and/or of the distance (D) between the at least two lenses (1131, 1132).

6. Camera system (1) according to one of the preceding claims, wherein the distance (D) between the at least two lenses (1131, 1132) is continuously adjustable.

7. Camera system (1) according to one of the preceding claims, wherein the laser transceiver (111) and the lens system (112) are arranged in accordance with an autocollimation setup.

8. Camera system (1) according to one of the preceding claims, wherein the at least two lenses (1131, 1132) are embodied such that they are identical.

9. Camera system (1) according to one of the preceding claims, wherein each of the at least two lenses (1131, 1132) is embodied in the form of an acylindrical lens.

10. Camera system (1) according to one of the preceding claims, wherein the measurement unit (11) has an electric drive arrangement (114) that is embodied for adjusting the distance (D) between the at least two lenses (1131, 1132) .

11. Camera system (1) according to Claim 10, further comprising a remote controller (15), wherein the electric drive arrangement (114) is embodied to adjust the distance (D) between the at least two lenses (1131, 1132) based on a control signal output by the remote controller (15) .

12. Camera system (1) according to one of the preceding claims, wherein the lens system (113) further has a front lens (1133) through which the laser signal exits the measurement unit (11) in a manner such that it can be incident on the object without further intersecting with a component of the measurement unit (11).

13. Camera system (1) according to one of the preceding claims, wherein the at least one parameter that is relevant for capturing the still and/or motion images is: an image sharpness, a resolution, a focal length, a focus, a lens position or a control parameter relating to image stabilization.

14. Camera system (1) according to one of the preceding claims, wherein the measurement unit (11) is embodied to be attached in the camera system (1) in a positionally fixed manner.

15. Camera system (1) according to one of the preceding claims, wherein the measurement unit (11) has an indication unit (115) that is embodied to optically indicate the distance (R) based on the measurement signal (119) .

16. Camera system (1) according to one of the preceding claims, wherein the camera unit (10) comprises a camera controller (116) that is coupled to the measurement unit (11) and is embodied to receive the measurement signal (119) and/or to provide the measurement unit (11) with a controller signal (1161).

17. Camera system (1) according to Claim 16, wherein the camera controller (116) is embodied to adjust at least one of a transmission power of the laser transceiver (111) and the distance (D) between the two lenses (1131, 1132) of the lens system (113) by way of the controller signal (1161).

18. Camera system (1) according to one of the preceding claims, wherein the at least two lenses (1131, 1132) are arranged to be displaceable relative to one another along a direction perpendicular to the optical axis of the lens system (113).

19. Camera system (1) according to one of the preceding claims, wherein the lens system (113) comprises a diffraction grating or prism (1137) through which the laser signal passes before it is incident on the at least two lenses (1131, 1132).

20. Camera system (1) according to one of the preceding claims, wherein the lens system (113) comprises an afocal zoom system.

## Revendications

1. Système de caméra (1), comprenant :
- une unité de caméra (10) destinée à acquérir des images fixes et/ou animées d'un objet (2), dans lequel l'unité de caméra (10) peut être réglée sur la base d'un signal de mesure (119) en ce qui concerne au moins un paramètre pertinent pour l'acquisition d'images fixes et/ou animées ;
- une unité de mesure (11) destinée à détecter une distance (R) entre l'objet et l'unité de caméra (10), dans lequel l'unité de mesure (11) comprend :
(i) un émetteur-récepteur laser (111) destiné à émettre un signal laser (L) et à recevoir un signal laser réfléchi par l'objet ;
(ii) une unité d'évaluation (112) couplée à l'émetteur-récepteur laser (111) et conçue pour fournir le signal de mesure (119), dans lequel le signal de mesure (119) est indicatif de la distance (R) entre l'objet et l'unité de caméra (10) ; et
(iii) un système de lentilles (113) qui comporte au moins deux lentilles (1131, 1132) espacées l'une de l'autre, à travers lesquelles passe le signal laser (L) émis par l'émetteur-récepteur laser (111), dans lequel au moins l'une des lentilles (1131, 1132) est agencée de manière mobile de sorte que la distance (D) entre lesdites au moins deux lentilles (1131, 1132) soit réglable de manière variable parallèlement à la direction d'émission du signal laser.

2. Système de caméra (1) selon la revendication 1, dans lequel le système de lentilles (113) de l'unité de mesure (11) est conçu pour délivrer le signal laser sous la forme d'un signal laser en forme de ligne.

3. Système de caméra (1) selon la revendication 2, dans lequel le signal laser en forme de ligne présente une largeur (B) d'au moins 5 mm à la sortie de l'unité de mesure (11).

4. Système de caméra (1) selon la revendication 3, dans lequel la divergence et/ou la largeur du signal laser en forme de ligne est réglable par ajustement de la distance (D) entre lesdites au moins deux lentilles (1131, 1132).

5. Système de caméra (1) selon l'une des revendications 2 à 4 précédentes, dans lequel l'unité de mesure (11) est conçue pour fournir un deuxième signal de mesure (118) qui est indicatif de la largeur (B) du signal laser en forme de ligne et/ou de la distance (D) entre lesdites au moins deux lentilles (1131, 1132).

6. Système de caméra (1) selon l'une des revendications précédentes, dans lequel la distance (D) entre lesdites au moins deux lentilles (1131, 1132) est réglable en continu.

7. Système de caméra (1) selon l'une des revendications précédentes, dans lequel l'émetteur-récepteur laser (111) et le système de lentilles (112) sont agencés sous forme d'une structure d'autocollimation.

8. Système de caméra (1) selon l'une des revendications précédentes, dans lequel lesdites au moins deux lentilles (1131, 1132) sont réalisées de manière identique l'une à l'autre.

9. Système de caméra (1) selon l'une des revendications précédentes, dans lequel chacune desdites au moins deux lentilles (1131, 1132) est réalisée sous la forme d'une lentille acylindrique.

10. Système de caméra (1) selon l'une des revendications précédentes, dans lequel l'unité de mesure (11) comprend un dispositif d'entraînement électrique (114) qui est conçu pour régler la distance (D) entre lesdites au moins deux lentilles (1131, 1132).

11. Système de caméra (1) selon la revendication 10, comprenant en outre une unité de commande à distance (15), dans lequel ledit dispositif d'entraînement électrique (114) est conçu pour régler la distance (D) entre lesdites au moins deux lentilles (1131, 1132) sur la base d'un signal de commande délivré par l'unité de commande à distance (15) .

12. Système de caméra (1) selon l'une des revendications précédentes, dans lequel le système de lentille (113) comprend en outre une lentille frontale (1133) à travers laquelle le signal laser sort de l'unité de mesure (11), de sorte qu'il peut être incident sur l'objet sans traverser davantage un composant de l'unité de mesure (11) .

13. Système de caméra (1) selon l'une des revendications précédentes, dans lequel ledit au moins un paramètre pertinent pour l'acquisition d'images fixes et/ou animées est le suivant : une netteté d'image, une résolution, une longueur focale, un foyer, une position de lentille ou un paramètre de commande relatif à la stabilisation d'image.

14. Système de caméra (1) selon l'une des revendications précédentes, dans lequel l'unité de mesure (11) est conçue pour être montée en position fixe dans le système de caméra (1).

15. Système de caméra (1) selon l'une des revendications précédentes, dans lequel l'unité de mesure (11) comprend une unité d'affichage (115) qui est conçue pour afficher optiquement la distance (R) sur la base du signal de mesure (119).

16. Système de caméra (1) selon l'une des revendications précédentes, dans lequel l'unité de caméra (10) comprend un contrôleur de caméra (116) couplé à l'unité de mesure (11) et conçu pour recevoir le signal de mesure (119) et/ou pour fournir un signal de contrôleur (1161) à l'unité de mesure (11).

17. Système de caméra (1) selon la revendication 16, dans lequel le contrôleur de caméra (116) est conçu pour régler, au moyen du signal de contrôleur (1161), au moins l'une d'une puissance d'émission de l'émetteur-récepteur laser (111) et de la distance (D) entre les deux lentilles (1131, 1132) du système de lentilles (113).

18. Système de caméra (1) selon l'une des revendications précédentes, dans lequel lesdites au moins deux lentilles (1131, 1132) sont agencées de manière déplaçable l'une par rapport à l'autre le long d'une direction perpendiculaire à l'axe optique du système de lentilles (113) .

19. Système de caméra (1) selon l'une des revendications précédentes, dans lequel le système de lentilles (113) comprend un réseau de diffraction ou un prisme (1137) à travers lequel le signal laser passe avant d'être incident sur lesdites au moins deux lentilles (1131, 1132) .

20. Système de caméra (1) selon l'une des revendications précédentes, dans lequel le système de lentilles (113) comprend un système de zoom afocal.
